**Europäisches Patentamt**

**European Patent Office**

**Office européen des brevets**

(19)

(11) Veröffentlichungsnummer : **0 160 734**
**B1**

## (12) EUROPÄISCHE PATENTSCHRIFT

(45) Veröffentlichungstag der Patentschrift:
30.08.89

(21) Anmeldenummer : 84109027.7

(22) Anmeldetag : 31.07.84

(51) Int. Cl.⁴ : **A 01 K   7/06, F 16 K 21/04**

(54) **Viehselbsttränkebecken.**

(30) Priorität : 05.05.84 DE 8413737 U

(43) Veröffentlichungstag der Anmeldung :
13.11.85 Patentblatt 85/46

(45) Bekanntmachung des Hinweises auf die Patenterteilung : 30.08.89 Patentblatt 89/35

(84) Benannte Vertragsstaaten :
AT BE CH DE FR LI

(56) Entgegenhaltungen :
DE–A– 2 648 333
DE–B– 2 133 343
DE–C–   841 969
DK–C–   121 414

(73) Patentinhaber : SUEVIA HAIGES GMBH & CO.
Postfach 1108 Max-Eyth-Strasse
D-7125 Kirchheim/Neckar (DE)

(72) Erfinder : Haiges, Frank
Fliederweg 11
D-7125 Kirchheim/N. (DE)

(74) Vertreter : Wolff, Michael, Dipl.-Phys.
Kirchheimer Strasse 69
D-7000 Stuttgart 75 (DE)

**Beschreibung**

Die Erfindung betrifft ein Viehselbsttränkebecken gemäß Oberbegriff des Anspruches 1.

Es ist aus der DE-B-21 33 343 bekannt ein derartiges Viehselbsttränkebecken mit einem in eine Tränkeschale eintauchenden, an einer waagrechten Schwenkachse aufgehängten Ventilbetätigungshebel zur Betätigung eines Sperrventiles, das einen mittels des Ventilbetätigungshebels und eines Ventilstößels zwischen einer Öffnungs- und einer Schließstellung bezüglich einer Ventilöffnung bewegbaren Ventilverschlußkörper aufweist, der mit einem ortsfesten Ventilsitz zusammenwirkt, und mit einem, um eine zur Hebelschwenkachse parallele Achse schwenkbaren, einarmigen Hilfshebel, der einerseits mit dem Ventilstößel und andererseits mittels eines verstellbaren Elementes mit dem Ventilbetätigungshebel zusammenwirkt, indem er die Öffnungsbewegung des Ventilbetätigungshebels auf den Ventilstößel überträgt, an dessen aus dem Ventilgehäuse herausragendem freiem Ende der Hilfshebel anliegt. Ein solches Viehselbsttränkebecken löst bereits die Aufgabe, jederzeit ohne weiteres eine bequeme Einstellung der Obergrenze des Wasserzuflusses zur Tränkschale zu ermöglichen, was bei den Viehselbsttränkebecken gemäß DE-A-2 648 333 bzw. DE-C-841 969 nicht der Fall ist.

Das erfindungsgemäße Viehselbsttränkebecken zeichnet sich im Vergleich mit dem Viehselbsttränkebecken gemäß DE-B-2 133 343 dadurch aus, daß als Schwenkachse des Hilfshebels die Schwenkachse des Ventilbetätigungshebels vorgesehen ist, daß der Hilfshebel als Spritzschutzkappe ausgebildet ist, die das freie Stößelende sowie die koaxiale Ventilöffnung aufnimmt, und daß das verstellbare Element am Hilfshebel gelagert ist.

Dadurch wird vorteilhafterweise erreicht, daß beide Schwenkachsen durch einen und denselben Bolzen verkörpert werden können und zwischen Kopf der Stellschraube einerseits und Ventilbetätigungshebel andererseits beim Schwenken dieses Hebels und des Hilfshebels eine die Einstellung der Stellschraube störende Relativbewegung nicht stattfindet, bzw. daß das Ventil so eingerichtet werden kann, daß es bei maximaler Öffnung einen ungewöhnlich großen Wasserzufluß zur Tränkschale ergibt, der ohne Spritzschutzkappe praktisch nicht möglich ist, weil Wasser bei hohem Durchfluß des Ventils nur von dessen Betätigungshebel, welcher der Ventilöffnung gegenübersteht, abgefangen würde, wobei ein Verspritzen von Wasser insbesondere nach beiden Seiten nicht ausgeschlossen wäre.

Durch die Erfindung wird auch erreicht, daß allein durch manuelles Verstellen des Elementes am Hilfshebel mit den Fingern einer Hand nach Hochklappen des Betätigungshebels mit der anderen Hand der beim Zurückklappen ausgeführte Hub des Ventilbetätigungshebels bis zu dessen Anschlag an Boden oder Rückwand der Tränkschale festgelegt werden kann, wodurch gleichzeitig zwangsläufig der Hub des Ventilstößels bestimmbar ist, welcher über den Durchfluß des mehr oder weniger weit geöffneten Ventile entscheidet, da dieser Durchfluß von der Relativlage des Stößels bezüglich des Ventilsitzes des Verschlußkörpers abhängt.

Zum Abstellen des Ventils des erfindungsgemäßen Viehselbsttränkebeckens kann das Element am Hilfshebel in der Weise verstellt werden, daß es von dem an der Tränkschale anschlagenden Betätigungshebel nicht mehr erreicht wird und deshalb auch nicht im Sinne der Ventilöffnung beaufschlagt werden kann. Bei auf dem Boden der Tränkschale liegendem Ventilbetätigungshebel ist ohne weiteres ersichtlich, daß das Tränkebeckenventil abgestellt ist.

Bei bevorzugten Ausführungsformen des erfindungsgemäßen Viehselbsttränkebeckens ist wie im Falle der DE-A-2 648 333 vorgesehen, daß dessen mit dem Wasserdruck schließender Ventilverschlußkörper im zylindrischen Ventilgehäuse mit lichtem radialem Abstand von diesem gelagert ist und mit einem den Ventilsitz bildenden, im Ventilgehäuse festsitzenden Dichtungsring zusammenwirkt sowie an einem vom Ventilgehäuse und Dichtungsring geführten Stößel starr mittig angeordnet ist, welcher eine ungerade Profilierung wenigstens einiger seiner axialen Längsschnitte aufweist und in seiner Querschnittsfläche in Längsrichtung zum Verschlußkörper hin an Inhalt zunimmt. Darüberhinaus ist erfindungsgemäß vorgesehen, daß der Hilfshebel wie im Falle der DE-B-2 133 343 einerseits an dem aus dem Ventilgehäuse herausragenden Ende des Ventilstößels anliegt, und daß die Querschnittsfläche des Ventilstößels in dessen Längsrichtung von diesem an zum herausragenden freien Stößelende hin an Inhalt nur abnimmt, wodurch gewährleistet ist, daß das aus dem geöffneten Ventil unter Druck austretende Wasser ungehindert gegen die Schutzkappe gespritzt wird.

Bei den bevorzugten Ausführungsformen ist der Hilfshebel mit einer Stellschraube als verstellbarem Element versehen, deren Kopf am Betätigungshebel anschlägt. Eine Schraube ist ein einfaches, fein einstellbares Element zur Festlegung des Hubes des Ventilverschlußkörpers.

Bei den bevorzugten Ausführungsformen ist der Betätigungshebel an der Stelle des Anschlags des unrunden Schraubenkopfes mit einem Vorsprung versehen, der die Drehlage des anliegenden Schraubenkopfes sichert. Dadurch ist ein ungewolltes Verstellen der Stellschraube beim wiederholten Hinunterdrücken des Betätigungshebels ausgeschlossen.

Bei den bevorzugten Ausführungsformen ist die Spritzschutzkappe an ihrer Innenseite mit einer oberhalb der Ventilöffnung angeordneten Wasserstrahl-Brechleiste versehen, deren waagrechte Kante gegen die Ventilöffnung weist. Mit dieser Brechkante wird eine Teilung des schräg nach oben gerichteten Wasserstrahles bewirkt, wobei dessen unterer Teil zum Abfließen über die Innenseite der Kappe nach unten gezwungen wird.

Bei den bevorzugten Ausführungsformen ist die Spritzschutzkappe mit zwei einstückig angeformten, durchbohrten Laschen versehen, die auf einem die Schwenkachse des Hilfshebels verkörpernden Bolzen sitzen, der oberhalb des Ventiles angeordnet ist. Diese Lagerung der Spritzschutzkappe an dem auch zur Aufhängung des Ventilbetätigungshebels verwendeten Bolzen erlaubt eine glatte Innengestaltung des oberen Teiles der Kappe, welche zu einem schnellen und vollständigen Wasserabfluß nach unten führt.

Bei den bevorzugten Ausführungsformen liegt der die Schwenkachse des Betätigungshebels verkörpernde Bolzen, von diesem Hebel unbedeckt, oben frei, sodaß der Betätigungshebel vom Hilfshebel weg nach oben zurücklegbar ist. Die Aussparung des üblichen Ventilbetätigungshebels wird ersatzweise von der Spritzschutzkappe abgeschirmt und erlaubt es, mit einer Hand den Betätigungshebel von der Stellschraube zu entfernen sowie abzulegen und anschließend den Schraubenkopf zur Einstellung des Hubes des Ventilverschlußkörpers zu ergreifen.

Bei den bevorzugten Ausführungsformen des erfindungsgemäßen Viehselbsttränkebeckens weist dessen Ventilstößel wie im Falle der DE-C-841 969 mehrere auf dessen Umfang verteilte Längsnuten auf, die zumindest bei maximal geöffnetem Ventil außerhalb des Ventils enden. Darüberhinaus zeichnen sich die bevorzugten Ausführungsformen dadurch aus, daß die Längsnuten in verschiedenen Abständen vom Ventilverschlußkörper enden und/oder unterschiedliche Querschnittsflächeninhalte aufweisen. Die entsprechenden baulichen Maßnahmen führen zu einer stufenweisen Erhöhung oder Erniedrigung des Ventildurchflusses an Wasser bei allmählich zunehmender Öffnung bzw. Schließung des Ventils. Die Stufung der Durchflußänderung ist natürlich umso feiner, je mehr voneinander abweichende Längsnuten vorhanden sind.

Bei einer (Variante einer ersten Ausführungsform als zweite) der bevorzugten Ausführungsformen weist der Ventilstößel einen an den Ventilverschlußkörper anschließenden, konischen Abschnitt auf, der sich zum freien Stößelende hin verjüngt. Damit wird zwar eine stufenweise Veränderung des Ventildurchflusses bei Verlagerung des Verschlußkörpers vermieden, jedoch neben der kontinuierlichen Durchflußänderung zugleich eine Verschlechterung der axialen Führung des Ventilstößels bewirkt, dessen an den konischen Abschnitt anschließender zylindrischer Abschnitt den Dichtungsringansatz nicht vollständig ausfüllen darf, es sei denn, er wäre seinerseits mit durchgehenden Längsnuten oder -bohrungen versehen.

Die bevorzugten Ausführungsformen zeichnen sich ferner aus durch zwei auf dem Bolzen gelagerte Flanschhülsen, die in die beiden Laschen der Spritzschutzkappe und in zwei diese seitlich einschließende Seitenflansche des Ventilbetätigungshebels von außen bis zum Anschlag der Hülsenflansche am Betätigungshebel eingreifen, sodaß zur vereinfachten Montage, De- und Remontage des Betätigungshebels und der Spritzschutzkappe (Hilfshebel) mittels des Bolzens diese beiden Hebel mittels der sie verbindenden Flanschhülsen zu einer Baugruppe von Einzelteilen vereinigt sind, welche als Einheit gehandhabt werden kann. Die genannten Montagen erfordern also nur das Durchstecken des Bolzens durch die Hülsen wie durch die Seitenwände der Tränkschale bzw. das Herausziehen des Bolzens aus diesen Lagerstellen.

Im folgenden ist die Erfindung anhand von zwei durch die Zeichnung beispielhaft dargestellten Ausführungsformen des erfindungsgemäßen Viehselbsttränkebeckens im einzelnen erläutert.

Es zeigt:

Fig. 1 eine teilweise zentral geschnitten dargestellte Seitenansicht der ersten Ausführungsform;

Fig. 2 eine abgebrochen dargestellte perspektivische Ansicht eines Ventilbetätigungshebels und eines Hilfshebels der ersten Ausführungsform;

Fig. 3 einen zentralen Längsschnitt durch ein Ventil der ersten Ausführungsform;

Fig. 4 eine ebene Abwicklung des Umfanges eines Ventilstößels der ersten Ausführungsform;

Fig. 5 eine Stirnansicht dieses Ventilstößels;

Fig. 6 eine auszugsweise Fig. 3 entsprechende Darstellung einer Variante der ersten Ausführungsform als zweiter Ausführungsform.

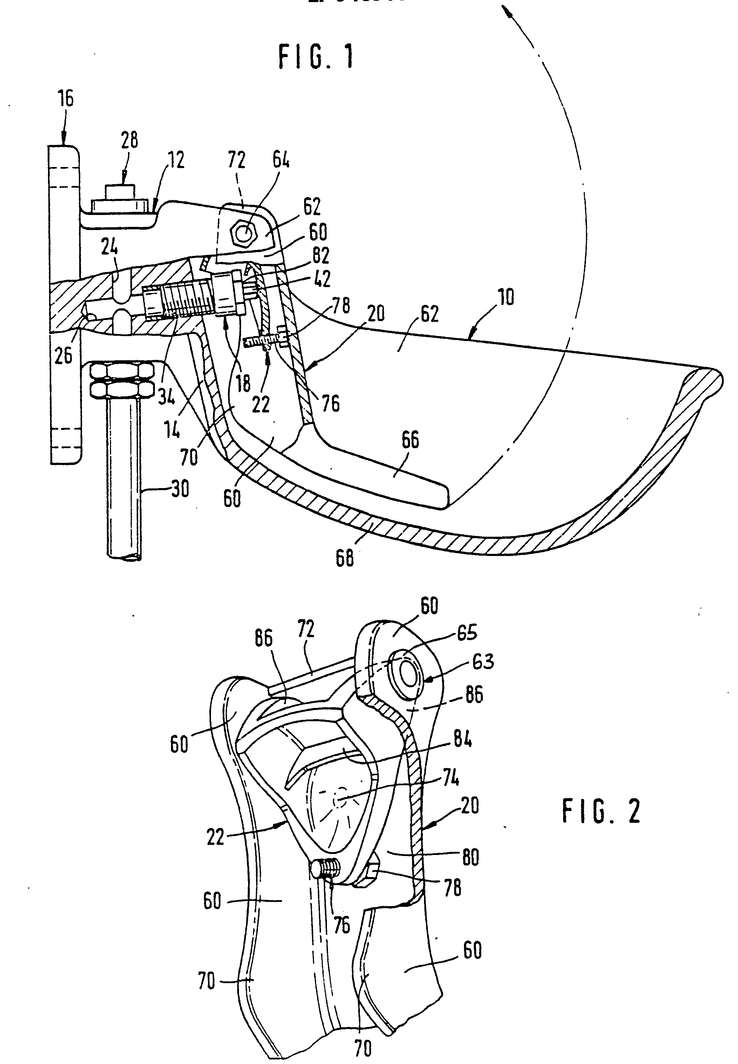

Im ersten Ausführungsbeispiel gemäß Fig. 1 bis 5 besteht das erfindungsgemäße Viehselbsttränkebecken hauptsächlich aus einer Tränkschale 10, aus einem Ansatz 12 an der Rückwand 14 der Schale, aus einem an den Ansatz angeformten Flansch 16 zur Befestigung des Beckens an einer Wand, aus einem durch die Rückwand in den Ansatz eingeschraubten Ventil 18, aus einem Ventilbetätigungshebel 20 und aus einem Hilfshebel 22.

Die Tränkschale 10 ist wie üblich seitlich und nach vorn ausgerundet; ihre im wesentlichen ebene Rückwand 14 ist gegen die Vertikale ein wenig geneigt.

Der Ansatz 12 weist eine vertikale, durchgehende Bohrung 24 und eine etwas gegen die Waagrechte geneigte, kreuzende Sackbohrung 26 auf, die von der Rückwand 14 der Tränkschale 10 her eingebracht ist. Das obere Ende der Bohrung 24 ist mittels eines eingeschraubten Stopfens 28 wasserdicht verschlossen. An das untere Ende der Bohrung 24 ist das obere Ende eines vertikal von unten heraufgeführten Wasserleitungsrohres 30 angeschlossen, in dem das Wasser unter üblichem Druck steht.

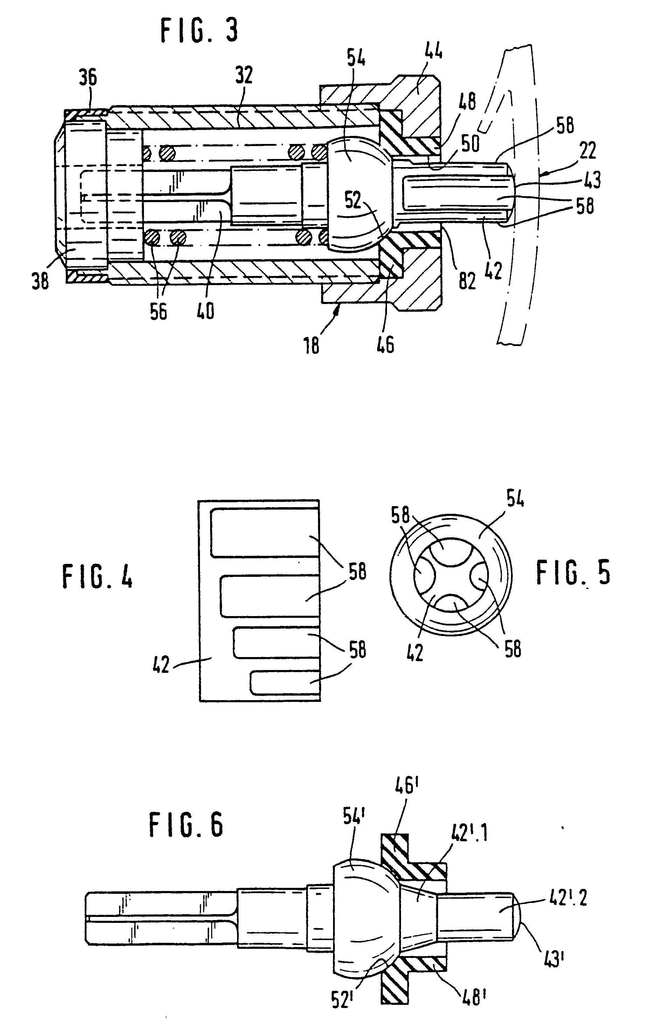

Das nahezu liegende Ventil 18 ist mittels seines hohlzylindrischen Gehäuses 32, das ein Außengewinde trägt, derart in eine mit einem Innengewinde versehene Erweiterung 34 der Sackbohrung 36 eingeschraubt, daß sein hinteres Ende wasserdichten Anschluß an die Sackbohrung 26 hat und sein vorderes Ende aus der Rückwand 14 der Tränkschale 10 nach vorn herausragt. Das im einzelnen aus den Fig. 3 bis 5 ersichtliche Ventil 18 ist an seinem hinteren, in Fig. 3 linken Ende mit einem auf das Ventilgehäuse 32 gezogenen, angeflanschten Dichtungsring 36 und mit einem ringförmigen, koaxialen Einsatz 38 versehen, der als Führungsbuchse für eine rückwärtige Verlängerung 40 eines Ventilstößels 42 dient. An seinem vorderen, in Fig. 3 rechten Ende ist das Ventilgehäuse 32 mit einer Überwurfmutter 44 versehen, deren durchbohrter Innenflansch zusammen mit der Stirnfläche des Gehäuses einen Haupt-Dichtungsring 66 einklemmt und einen axialen Fortsatz 48 dieses Dichtungsringes aufnimmt. Dichtungsring 46 und Forsatz 48 weisen eine gemeinsame, durchgehende Bohrung 50 auf, deren axial innere Ringkante eine sphärische, konkave Ringfläche 52 des Dichtungsringes 46 radial innen begrenzt. Mit dieser Ringfläche 52, die als Ventilsitz dient, wirkt ein sphärischer Verschlußkörper 54 zusammen, der axial zwischen dem Stößel 42, der von der Bohrung 50 geführt wird und aus der Überwurfmutter 44 nach vorn herausragt, und der Verlängerung 40 angeordnet und sowohl mit dem Stößel als auch mit dessen Verlängerung einstückig ausgebildet ist. Der Durchmesser des Verschlußkörpers 54 ist kleiner als der Innendurchmesser des Gehäuses 32, aber größer als der Durchmesser der Verlängerung 40, deren beim Hub des Stößels 42 im Bereich des Einsatzes 38 liegendes freies Ende einen wasserdurchlassenden kreuzförmigen Querschnitt aufweist. Die Verlängerung 40 trägt eine auf Druck beanspruchte Schraubenfeder 56 als Ventilfeder, die sich einerseits am Einsatz 38 und andererseits am Verschlußkörper 54 abstützt und das mit dem Wasserdruck schließende Ventil auch dann geschlossen hält, wenn der Wasserdruck einmal vorübergehend zu gering sein sollte. Der kreiszylindrische Ventilstößel 42 ist mit vier auf seinen Umfang verteilten Längsnuten 58 verschiedener Länge versehen, die am sphärisch abgerundeten Freien Ende 43 des Stößels axial ausmünden und in unterschiedlicher Entfernung vom Verschlußkörper 54 enden sowie mit abnehmender Entfernung zunehmende Querschnittsflächeninhalte aufweisen, sodaß der Wasserdurchfluß des Ventils bei dessen Öffnung mit dem Stößelhub progressiv zunimmt, wie sich aus den Fig. 4 und 5 ergibt.

Der Ventilbetätigungshebel 20 ist ungefähr S-förmig gestaltet und weist eine im wesentlichen U-förmige Querschnittsform auf. An seinem oberen Ende ist der Betätigungshebel 20 mittels seiner beiden Seitenflansche 60 und eines waagrecht an den beiden hochgezogenen Seitenwänden 62 der Tränkschale 10 gelagerten Bolzens 64 schwenkbar aufgehängt. Mit seinem zungenähnlichen unteren und vorderen Ende 66 taucht der Betätigungshebel 20 in die Tränkschale 10 ein und verläuft dort in gleichmäßigem Abstand zu deren Boden 68. Die Seitenflansche 60 des Betätigungshebels 20 sind mit je einem Rücksprung 70 versehen, die beim Niederdrücken des Hebelendes 66 an der Rückwand 14 der Tränkschale 10 anschlagen, bevor deren Boden 68 erreicht ist. An seinem oberen Ende ist der Betätigungshebel 20 zwischen dessen Seitenflanschen 60 mit einem Ausschnitt 72 versehen, der den die Hebelschwenkachse bestimmenden Bolzen 64 nach oben freilegt.

Der Hilfshebel 22 ist als seitlich, vorn und oben geschlossene Spritzschutzkappe ausgebildet, deren zentrale Platte 74 nach unten dreieckig ausläuft und an dem aus dem Ventilgehäuse 32 herausragenden freien Ende 43 des Ventilstößels 42 anliegt sowie mit einer Stellschraube 76 als verstellbarem Element versehen ist, die eine Kontermutter tragen könnte und mit ihrem nach vorn weisenden Kopf 78 an der Rückseite des zentralen Teiles 80 des Ventilbetätigungshebels 20 anliegt, an dem eine Rippe oder dergleichen angebracht sein könnte, die verhindert, daß sich der sechskantige Schraubenkopf selbsttätig dreht, solange der Betätigungshebel bewegt wird. Der Hilfshebel 22 überwölbt als Spritzschutzkappe die von dem Dichtungsfortsatz 48 und dem Stößel 42 des Ventils 18 gebildete Ventilöffnung 82, gegen eine Wasserstrahl-Brechleiste 84 gerichtet ist, die an die einstückige Kappe (22) angeformt ist, die auf beiden Seiten mit je einer angeformten, durchbohrten Lasche 86 versehen ist, die zwischen den Seitenflanschen 60 des Betätigungshebels 20 auf dem Bolzen 64 sitzen, sodaß der einarmige Hilfshebel 22 axial fixiert ist und mit dem Betätigungshebel 20 eine gemeinsame Schwenkachse hat. Da der Schwerpunkt des Ventilbetätigungshebels 20 zwar unterhalb, jedoch nicht unter, sondern vor dessen Schwenkachse liegt, drückt die in Richtung der Achse der Stellschraube 76 wirkende Kraftkomponente des Gewichtes des Betätigungshebels 20 den Ventilstößel 42 mittels der Stellschraube 76 und des Hilfshebels 22 nach hinten, wird aber an dessen Schwenkung und damit Öffnung des Ventils 18 durch den Wasserdruck in Verbindung mit dem Druck der Schraubenfeder 56 gehindert, die entgegengesetzt wirken. Ist die Stellschraube 76 genügend weit nach hinten geschraubt worden, spätestens bei Anschlag ihres Kopfes 78 am Hilfshebel 22, dann liegen die Rücksprünge 70 des Betätigungshebels 20 an der Rückwand 14 der Tränkschale 10 an und das Ventil 18 ist abgestellt, was daran zu sehen ist, daß das Hebelende 66 nahe am Schalenboden 68 liegt. Zur Ein- oder Verstellung der Stellschraube 76 kann dieses Hebelende 66 um den Bolzen 64 rum nach oben und hinten geschwenkt werden, sodaß der zentrale Hebelteil 80 den Schraubenkopf 78 freilegt. Die Relativlage der Stellschraube 76 bezüglich des Hilfshebels 22 wird nun so gewählt, daß sich der gewünschte maximale Hub des Ventilstößels 42 ergibt, der zu einem bestimmten höchsten Wasserdurchfluß des Ventils 18 führt, welcher bei dessen Öffnung allmählich erreicht wird, nämlich in Stufen, die durch die Nutung des Stößels festgelegt sind. Das dabei aus dem Ventil 18 durch dessen Öffnung 82 austretende Wasser spritzt hauptsächlich gegen die Platte 74 des Hilfshebels 22, an der es teils herabläuft, teils hinaufläuft bis zur Brechleiste 84 ; soweit diese das Wasser nicht zum Abfluß nach unten zwingt, wird dieses weiter oben von dem kappenförmigen Hilfshebel 22 abgefangen und zum Ablauf gebracht.

Bei der Variante der ersten Ausführungsform ist gemäß Fig. 6 vorgesehen, daß der Ventilstößel 42′ im Anschluß an den Ventilverschlußkörper 54′ einen sich nach vorn verjüngenden kegelstumpfförmigen Abschnitt 42′. 1 aufweist und im übrigen nur noch aus einem ungenuteten kreiszylindrischen Abschnitt 42′. 2 besteht, der das freie Stößelende 43′ bildet. Auch dadurch ist gewährleistet daß beim Abheben des Verschlußkörpers 54′ von der Ringfläche 52′ des Dichtungsringes 46′ mit Fortsatz 48′ beim Hindurchbewegen des konischen Stößelabschnittes 42′. 1 durch diese Ringfläche 52′ der Durchlaßquerschnitt des Ventils allmählich, und zwar stetig in diesem Fall, zunimmt.

Im übrigen stimmt die zweite Ausführungsform mit der ersten überein.

**Patentansprüche**

1. Viehselbsttränkebecken mit einem in eine Tränkschale (10) eintauchenden, an einer waagrechten Schwenkachse (64) aufgehängten Ventilbetätigungshebel (20) zur Betätigung eines Sperrventiles (18), das einen mittels des Ventilbetätigungshebels (20) und eines Ventilstößels (42) zwischen einer Öffnungs- und einer Schließstellung bezüglich einer Ventilöffnung (82) bewegbaren Ventilverschlußkörper (54) aufweist, der mit einem ortsfesten Ventilsitz (52) zusammenwirkt, und mit einem, um eine zur Hebelschwenkachse (64) parallele Achse (64) schwenkbaren einarmigen Hilfshebel (22), der einerseits mit dem Ventilstößel (42) und andererseits mittels eines verstellbaren Elementes (76) mit dem Ventilbetätigungshebel (20) zusammenwirkt, indem er die Öffnungsbewegung des Ventilbetätigungshebels (20) auf den Ventilstößel (42) überträgt, an dessen aus dem Ventilgehäuse (32) herausragendem freiem Ende (43) der Hilfshebel (22) anliegt, dadurch gekennzeichnet, daß als Schwenkachse (64) des Hilfshebels (22) die Schwenkachse (64) des Ventilbetätigungshebels (20) vorgesehen ist, daß der Hilfshebel (22) als Spritzschutzkappe (Fig. 2) ausgebildet ist, die das freie Stößelende (43) sowie die koaxiale Ventilöffnung (82) aufnimmt, und daß das verstellbare Element (76) am Hilfshebel (22) gelagert ist.

2. Viehselbsttränkebecken nach Anspruch 1, dessen mit dem Wasserdruck schließender Ventilverschlußkörper (54) im zylindrischen Ventilgehäuse (32) mit lichtem radialem Abstand von diesem gelagert ist und mit einem den Ventilsitz (52) bildenden, im Ventilgehäuse (32) festsitzenden Dichtungsring (46) zusammenwirkt sowie an einem vom Ventilgehäuse (32) und Dichtungsring (46) geführten Stößel (42) starr mittig angeordnet ist, welcher eine ungerade Profilierung wenigstens einiger seiner axialen Längsschnitte aufweist und in seiner Querschnittsfläche in Längsrichtung zum Verschlußkörper (54) hin an Inhalt zunimmt, dadurch gekennzeichnet, daß der Hilfshebel (22) einerseits an dem aus dem Ventilgehäuse (32) herausragenden Ende (43) des Ventilstößels (42) anliegt und daß die Querschnittsfläche des Ventilstößels (42) in dessen Längsrichtung von diesem an zum herausragenden freien Stößelende (43) hin an Inhalt nur abnimmt (Fig. 3 bis 5).

3. Viehselbsttränkebecken nach Anspruch 1 oder 2, dadurch gekennzeichnet, daß der Hilfshebel (22) mit einer Stellschraube (76) als verstellbarem Element versehen ist, deren Kopf (78) am Betätigungshebel (20) anschlägt (Fig. 1).

4. Viehselbsttränkebecken nach Anspruch 3, dadurch gekennzeichnet, daß der Betätigungshebel (20) an der Stelle des Anschlags des unrunden Schraubenkopfes (78) mit einem Vorsprung versehen ist, der die Drehlage des anliegenden Schraubenkopfes sichert.

5. Viehselbsttränkebecken nach einem der Ansprüche 1 bis 4, dadurch gekennzeichnet, daß die Spritzschutzkappe (22) an ihrer Innenseite mit einer oberhalb der Ventilöffnung (82) angeordneten Wasserstrahl-Brechleiste (84) versehen ist, deren waagrechte Kante gegen die Ventilöffnung weist (Fig. 2, 3).

6. Viehselbsttränkebecken nach einem der Ansprüche 1 bis 5, dadurch gekennzeichnet, daß die Spritzschutzkappe (22) mit zwei einstückig angeformten, durchbohrten Laschen (86) versehen ist, die auf einem die Schwenkachse des Hilfshebels (22) verkörpernden Bolzen (64) sitzen, der oberhalb des Ventiles (18) angeordnet ist (Fig. 2).

7. Viehselbsttränkebecken nach Anspruch 6, dadurch gekennzeichnet, daß der die Schwenkachse des Betätigungshebels (20) verkörpernde Bolzen (64), von diesem Hebel (20) unbedeckt, oben frei liegt, sodaß jener Hebel (20) vom Hilfshebel (22) weg nach oben zurücklegbar ist (Fig. 1, 2).

8. Viehselbsttränkebecken nach einem der Ansprüche 1 bis 7, dessen Ventilstößel (42) mehrere auf dessen Umfang verteilte Längsnuten (58) aufweist, die zumindest bei maximal geöffnetem Ventil (18) außerhalb des Ventils (18) enden, dadurch gekennzeichnet, daß die Längsnuten (58) in verschiedenen Abständen vom Ventilverschlußkörper (54) enden und/oder unterschiedliche Querschnittsflächeninhalte aufweisen (Fig. 3 bis 5).

9. Viehselbsttränkebecken nach einem der Ansprüche 1 bis 7, dadurch gekennzeichnet, daß der Ventilstößel (42′) einen an den Ventilverschlußkörper (54′) anschließenden, konischen Abschnitt (42′.1) aufweist, der sich zum freien Stößelende (43′) hin verjüngt (Fig. 6).

10. Viehselbsttränkebecken nach einem der Ansprüche 6 bis 9, gekennzeichnet durch zwei auf dem Bolzen (64) gelagerte Flanschhülsen (63), die in die beiden Laschen (86) der Spritzschutzkappe (22) und in zwei diese seitlich einschließende Seitenflansche (60) des Ventilbetätigungshebels (20) von außen bis zum Anschlag der Hülsenflansche (65) am Betätigungshebel (20) eingreifen.

## Claims

1. Self-watering cattle trough with a valve-actuating lever (20), which dips into a drinking bowl (10) and is suspended at an horizontal pivot axle (64), for the actuation of a stop valve (18), which displays a valve closure body (54), which movable with respect to a valve opening (82) between an opening and a closing position by means of the valve-actuating lever (20) and a valve push-rod (42) and which co-operates with a fixedly located valve seat (52), and with a one-armed auxiliary lever (22), which is pivotable about an axle (64) parallel to the lever pivot axle (64) and co-operates on the one hand with the valve push-rod (42) and on the other hand by means of an adjustable element (76) with the valve-actuating lever (20) in that it transmits the opening movement of the valve-actuating lever (20) to the valve push-rod (42), at the free end (43), projecting out of the valve housing (32), of which rests the auxiliary lever (22), characterised thereby, that the pivot axle (64) of the valve-actuating lever (20) is provided as pivot axle (64) of the auxiliary lever (22), that the auxiliary lever (22) is constructed as spray protection cap (Fig. 2), which receives the free push-rod end (43) as well as the co-axial valve opening (82), and that the adjustable element (76) is borne at the auxiliary lever (22).

2. Self-watering cattle trough according to claim 1, the valve closure body (54) of which closes by the water pressure, is borne in the cylindrical valve housing (32) at a clear radial spacing from this and co-operates with a sealing ring (46), which forms the valve seat (52) and sits firmly in the valve housing (32), as well as is rigidly arranged centrally at a push-rod (42), which is guided by the valve housing (32) and the sealing ring (46) and which displays a non-linear profiling of at least some of its axial sections and increases in content in its cross-sectional area in longitudinal direction towards the closure body (54), characterised thereby, that the auxiliary lever (22) at one side rests against the end (43), projecting out of the valve housing (32), of the valve push-rod (42) and that the cross-sectional area of the valve push-rod (42) only decreases in content from there on in longitudinal direction towards the projecting free-push rod end (43) (Figs. 3 to 5).

3. Self-watering cattle trough according to claim 1 or 2, characterised thereby, that the auxiliary lever (22) is provided with a setscrew (76) as adjustable element, the head (78) of which abuts against the actuating lever (20) (Fig. 1).

4. Self-watering cattle trough according to claim 3, characterised thereby, that the actuating lever (20) is provided at the place of abutment of the non-circular screw head (78) with a projection which secures the rotational position of the abutting screw head.

5. Self-watering cattle trough according to one of the claims 1 to 4, characterised thereby, that the spray protection cap (22) is provided at its inward side with a water jet breaking strip (84), which is arranged above the valve opening (82) and the horizontal edge of which points towards the valve opening (Figs. 2 and 3).

6. Self-watering cattle trough according to one of the claims 1 to 5, characterised thereby, that the spray protection cap (22) is provided with two straps (86), which are shaped on integrally and drilled through and which sit on a pin (64), which embodies the pivot axle of the auxiliary lever (22) and is arranged above the valve (18) (Fig. 2).

7. Self-watering cattle trough according to claim 6, characterised thereby, that the pin (64), which embodies the pivot axle of the auxiliary lever (22), lies free at the top and not covered by this lever (20) so that this lever (20) can be laid back upwardly away from the auxiliary lever (22) (Figs. 1 and 2).

8. Self-watering cattle trough according to one of the claims 1 to 7, the valve push-rod (42) of which displays several longitudinal grooves (58), which are distributed over its circumference and end externally of the valve (18) at least when the valve (18) is opened to the maximum, characterised thereby, that the longitudinal grooves (58) end at different spacings from the valve closure body (54) and/or display different cross-sectional area contents (Figs. 3 to 5).

9. Self-watering cattle trough according to one of the claims 1 to 7, characterised thereby, that the valve push-rod (42') displays a conical portion (42'.1), which adjoins the valve closure body (54') and narrows towards the free push-rod end (43') (Fig. 6).

10. Self-watering cattle trough according to one of the claims 6 to 9, characterised by two flanged sleeves (63), which are borne on the pin (64) and engage from the outside into both the straps (86) of the spray protection cap (22) and into two side flanges (60), which enclose this laterally, of the valve-actuating lever (20) until abutment of the sleeve flanges (65) at the actuating lever (20).

## Revendications

1. Abreuvoir automatique pour bétail comportant un levier d'actionnement de soupape (20) suspendu à un axe de pivotement horizontal (64) et plongeant dans une cuvette d'abreuvoir (10), en vue d'actionner une soupape d'arrêt (18) qui possède un corps de fermeture de soupape (54) déplaçable au moyen du levier d'actionnement de soupape (20) et d'un poussoir de soupape (42), par rapport à une ouverture de soupape (82), entre une position ouverte et une position fermée, lequel corps de fermeture de soupape (54) coopère avec un siège de soupape fixe (52) et avec un levier auxiliaire à bras unique (22) apte à pivoter autour d'un axe (64) parallèle à l'axe de pivotement de levier (64) et coopérant, d'un côté, avec le poussoir de soupape (42) et, de l'autre côté, avec le levier d'actionnement de soupape (20) au moyen d'un élément réglable (76), pour ainsi transmettre le mouvement d'ouverture du levier d'actionnement de soupape (20) au poussoir de soupape (42) lequel présente une extrémité libre (43) qui fait saillie hors de la boîte de soupape (32) et contre laquelle s'appuie le levier auxiliaire (22), caractérisé en ce que l'axe de pivotement (64) du levier d'actionnement de soupape (20) est prévu comme axe de pivotement (64) du levier auxiliaire (22), en ce que le levier auxiliaire (22) est conçu sous la forme d'un couvercle anti-projections (Fig. 2) qui entoure l'extrémité libre de poussoir (43) ainsi que l'ouverture de soupape coaxiale (82), et en ce que l'élément réglable (76) est monté sur le levier auxiliaire (22).

2. Abreuvoir automatique pour bétail selon la revendication 1, dont le corps de fermeture de soupape (54) qui se ferme sous l'effet de la pression d'eau, est logé dans la boîte de soupape cylindrique (32) avec un écartement intérieur radial vis-à-vis de celle-ci et coopère avec une bague d'étanchéité (46) calée dans la boîte de soupape (32), qui forme le siège de soupape (52), tout en étant monté rigidement d'une manière centrale sur un poussoir (42) guidé par la boîte de soupape (32) et la bague d'étanchéité (46), poussoir (42) qui présente un profil irrégulier de certaines au moins de ses sections longitudinales axiales et dont la section transversale augmente en surface dans une direction longitudinale vers le corps de fermeture (54), caractérisé en ce que le levier auxiliaire (22) s'appuie d'un côté contre l'extrémité (43) du poussoir de soupape (42), qui fait saillie hors de la boîte de soupape (32), et en ce que la section transversale du poussoir de soupape (42) dans sa direction longitudinale ne diminue en surface que depuis celui-ci vers l'extrémité libre saillante de poussoir (43) (Fig. 3 à 5).

3. Abreuvoir automatique pour bétail selon la revendication 1 ou 2, caractérisé en ce que le levier auxiliaire (22) comporte, comme élément réglable, une vis de réglage (76) dont la tête (78) est en butée contre le levier d'actionnement (20) (Fig. 1).

4. Abreuvoir automatique pour bétail selon la revendication 3, caractérisé en ce que le levier d'actionnement (20) comporte, au point de butée de la tête de vis non ronde (78), un épaulement qui bloque la position en rotation de la tête de vis adjacente.

5. Abreuvoir automatique pour bétail selon l'une des revendications 1 à 4, caractérisé en ce que le couvercle anti-projections (22) comporte, au niveau de sa face intérieure, une languette brise-jet d'eau (84) disposée au-dessus de l'ouverture de soupape (82) et dont l'arête horizontale est tournée vers l'ouverture de soupape (Fig. 2, 3).

6. Abreuvoir automatique pour bétail selon l'une des revendications 1 à 5, caractérisé en ce que le couvercle anti-projections (22) comporte deux flasques percés (86) formés d'une seule pièce et montés sur un axe (64) constituant l'axe de pivotement du levier auxiliaire (22) et disposé au-dessus de la soupape (18) (Fig. 2).

7. Abreuvoir automatique pour bétail selon la revendication 6, caractérisé en ce que l'axe (64) constituant l'axe de pivotement du levier d'actionnement (20), non recouvert par celui-ci, est libre en haut, de sorte que ledit levier (20) peut être repoussé vers le haut à distance du levier auxiliaire (22) (Fig. 1, 2).

8. Abreuvoir automatique pour bétail selon l'une des revendications 1 à 7, dont le poussoir de soupape (42) présente, réparties sur son pourtour, plusieurs rainures longitudinales (58) qui, au moins lorsque la soupape (18) est ouverte au maximum, se terminent à l'extérieur de celle-ci, caractérisé en ce que les rainures longitudinales (58) se terminent à différentes distances par rapport au corps de fermeture de soupape (54) et/ou présentent différentes surfaces en section transversale (Fig. 3 à 5).

9. Abreuvoir automatique pour bétail selon l'une des revendications 1 à 7, caractérisé en ce que le poussoir de soupape (42') comporte un tronçon conique (42'.1) rattaché au corps de fermeture de soupape (54'), qui s'effile en direction de l'extrémité libre de poussoir (43') (Fig. 6).

10. Abreuvoir automatique pour bétail selon l'une des revendications 6 à 9, caractérisé par deux douilles à collets (63) qui s'emboîtent de l'extérieur dans les deux flasques (86) du couvercle anti-projections (22) et dans deux rebords latéraux (60) du levier d'actionnement de soupape (20) qui jouxtent ledit couvercle latéralement, jusqu'à ce que les collets de douilles (65) viennent en butée contre le levier d'actionnement (20).

FIG. 1

FIG. 2

1

FIG. 3

FIG. 4

FIG. 5

FIG. 6

2